## Europäisches Patentamt

## European Patent Office

## Office européen des brevets

(11) Veröffentlichungsnummer: **0 123 731**
**B1**

(12) # EUROPÄISCHE PATENTSCHRIFT

(45) Veröffentlichungstag der Patentschrift:
**12.08.87**

(51) Int. Cl.⁴: **B 60 K 31/00,** F 02 D 41/00

(21) Anmeldenummer: **83112873.1**

(22) Anmeldetag: **21.12.83**

(54) Einrichtung zur Übertragung der Stellposition eines Sollwertgebers.

(30) Priorität: **07.03.83 DE 3307968**

(43) Veröffentlichungstag der Anmeldung:
**07.11.84 Patentblatt 84/45**

(45) Bekanntmachung des Hinweises auf die Patenterteilung:
**12.08.87 Patentblatt 87/33**

(84) Benannte Vertragsstaaten:
**DE FR GB IT SE**

(56) Entgegenhaltungen:
**DE-B-1 214 557**
**GB-A-2 052 625**
**GB-A-2 067 244**
**US-A-3 520 380**
**US-A-3 997 019**

(73) Patentinhaber: **VDO Adolf Schindling AG,
Gräfstrasse 103, D-6000 Frankfurt/Main (DE)**

(72) Erfinder: **Mann, Arnold, Streitfeld 5, D-6465 Bieber
(DE)**
Erfinder: **Ruschek, Gerhard, Elsa- Brandström-
Strasse 1, D-6234 Hattersheim 1 (DE)**
Erfinder: **Zenker, Reinhard, Toni- Sender- Strasse 2,
D-6000 Frankfurt/Main (DE)**

(74) Vertreter: **Könekamp, Herbert, Dipl.- Ing., Sodener
Strasse 9, D-6231 Schwalbach (DE)**

EP 0 123 731 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zur Übertragung der Stellposition zwischen einer Leerlauf- und einer Vollgasstellung eines die Fahrgeschwindigkeit eines Fahrzeuges steuernden und durch den Fahrzeugführer über ein Steuerelement verstellbaren elektronischen Sollwertgebers durch elektrische Übertragungsmittel auf ein entsprechend zwischen einer Leerlauf- und einer Vollgasstellung verstellbares Stellglied, das mit einem das Kraftstoff-Luft-Gemisch eines Verbrennungsmotors steuernden Stellorgan gekuppelt ist.

Bei derartigen bekannten Einrichtungen erfolgt die Übertragung der Gaspedalstellung auf die Drosselklappe eines Vergasers bzw. auf die Regelstange eine Einspritzpumpe auf elektrischem Weg. Dabei wird durch das Gaspedal ein Sollwertgeber verstellt, der ein elektrisches Signal zum entsprechenden Ansteuern des Stellglieds erzeugt. Von diesem wird dann eine Stellbewegung ausgeführt und auf das durch die Drosselklappe oder die Regelstange der Einspritzpumpe gebildete Stellorgan übertragen.

Zwar arbeiten diese bekannten Einrichtungen an sich betriebssicher. Trotzdem sind ausnahmsweise auftretende Störfälle denkbar, in denen keine korrekte Übertragung der Sollwertgeberstellung auf das Stellglied und auf das Stellorgan erfolgt. Dabei kann das Fahrzeug manövrierunfähig werden, wenn das Stellorgan nicht mehr betätigbar ist. Eine solche Situation ist gefährlich, da das Fahrzeug zum einen plötzlich zu einem verkehrsungünstigen Augenblick manövrierunfähig werden und zum anderen an gefährdeten z. B. unübersichtlichen Stellen der Fahrbahn liegenbleiben kann.

Aus der DE-B-12 14 557 ist eine Einrichtung bekannt, bei der von einem Gaspedal über ein Gestänge eine Drosselklappe betätigbar ist. Zusätzlich wird durch das Gaspedal auch ein Potentiometer betätigt, wobei der am Potentiometer abgegriffene Wert mit einem Geschwindigkeits-Istwert verglichen und bei Abweichungen entsprechend ein Stellmotor angesteuert wird. Dieser Stellmotor betätigt über eine Schnecke und ein Zahnsegment ein Hebelsystem, das an dem vom Gaspedal zur Drosselklappe führenden Hebelsystem angreift und dort geringfügige Korrekturbewegungen durchführen kann. Die Grundeinstellung der Drosselklappe erfolgt mechanisch über das Hebelsystem.

Es ist daher Aufgabe der Erfindung, eine Einrichtung nach dem Oberbegriff zu schaffen, die eine Manövrierfähigkeit des Fahrzeugs gewährleistet.

Diese Aufgabe wird erfindungsgemäß dadurch gelöst, dazwischen Sollwertgeber und Stellglied bzw. Stellorgan ein mechanisches Übertragungselement angeordnet ist, das mit dem Sollwertgeber und/oder dem Stellglied und/oder dem Stellorgan kuppelbar und durch das die Stellung des Sollwertgebers auf das Stellorgan übertragbar ist, wobei das Übertragungselement von dem Sollwertgeber und/oder dem Stellglied und/oder dem Stellorgan bei der Stellung des Sollwertgebers entsprechenden Stellung des Stellorgans entkuppelt ist. Im normalen defektlosen Betrieb der Einrichtung erfolgt eine Bewegungsübertragung nur durch die elektrische Ansteuerung des Stellglieds, während das Übertragungselement kraftfrei und passiv bleibt. Tritt aber ein Defekt an der elektrischen Signalübertragung, dem Sollwertgeber oder dem Stellglied auf, so erfolgt die Bewegungsübertragung mechanisch durch das Übertragungselement. Das Fahrzeug kann so ohne anzuhalten aus dem Verkehrsfluß heraus bis zur nächsten Werkstatt gefahren werden.

Bei intakter Einrichtung erfolgt praktisch keine störende Beeinflussung durch das passive Übertragungselement.

Das Übertragungselement kann ein Gestänge sein. Ist das Übertragungselement aber ein Bowdenzug, so ist seine Verlegung im Kraftfahrzeug auf einfache Weise möglich.

Um im Defektfall ein Hochlaufen der Motordrehzahl und dadurch möglicherweise hervorgerufene Fehlreaktionen des Fahrers zu vermeiden, kann das Stellglied und/oder das Stellorgan in seine Leerlaufstellung federnd vorgespannt sein, so daß in der Leerlaufposition des Gaspedals auch das Stellorgan sich in der Leerlaufposition befindet.

Das Übertragungselement kann an Sollwertgeber und/oder Stellglied und/oder Stellorgan in Verstellrichtung um ein bestimmtes Spiel frei beweglich angeordent sein, das kleiner als der maximale Verstellweg ist. Dieses Spiel beträgt vorzugsweise 30 % des maximalen Verstellwegs von Sollwertgeber oder Stellglied oder Stellorgan. Dadurch kann bei intakter Einrichtung das Stellglied und das Stellorgan sich ungehindert in eine der Leerlaufstellung nähere Position bewegen als der der momentanen Sollwertgeberposition entsprechenden Stellung des Stellglieds. Dieses muß möglich sein, wenn das Stellglied nicht nur in Abhängigkeit von der Sollwertgeberposition, sondern darüber hinaus auch noch von anderen Zusatzfunktionen elektrisch ansteuerbar ist. Eine solche Zusatzfunktion ist z. B. eine Enddrehzahlbegrenzung oder eine Geschwindigkeitsbegrenzung bzw. -regelung. Zu diesem Zweck erfolgt die Ansteuerung des Stellglieds nicht direkt durch den Sollwertgeber, sondern über einen vorgeschalteten elektronischen Regler. Ein Spiel in der Größenordnung von 30 % des maximalen Verstellwegs ist ausreichend um eine Kupplung des Übertragungselements zu vermeiden und gleichzeitig im Defektfall noch eine Stellorganbewegung bis zu 70 % des maximalen Verstellwegs zu ermöglichen.

In einer einfachen Ausbildung der Erfindung kann das Übertragungselement einen Anschlag besitzen, der nach Überwindung des Spiels formschlüssig mit einem Verstellglied des Sollwertgebers oder des Stellglieds oder des Stellorgans kuppelbar ist.

Weist das Übertragungselement ein Ausgleichselement auf, über das entgegen einer Federkraft gleichzeitig der mit dem Sollwertgeber verbindbare Teil des Übertragungselements in Vollgasrichtung und der mit dem Stellglied bzw. Stellorgan verbindbare Teil des Übertragungselements in Leerlaufrichtung bewegbar ist, so kann im Falle eines Defekts des Sollwertgebers aber bei noch arbeitendem elektronischem Regler das Stellglied sich in Richtung zur Leerlaufstellung bewegen, obwohl das Übertragungselement bereits eine formschlüssige Kupplung zwischen dem das Steuerelement bildenden Gaspedal und dem Stellglied bzw. dem Stellorgan hergestellt hat.

Zur Erzeugung der am Übertragungselement angreifenden Federkraft kann das Ausgleichselement eine vorgespannte Druckfeder besitzen, wobei die relativ zueinander sich bewegenden Teile entweder eine drehende oder eine lineare Bewegung ausführen können.

Kompakte leicht und einfach montierbare Baueinheiten werden dadurch erzielt, daß das Ausgleichselement im Sollwertgeber bzw. im Stellglied integriert ist.

Ausführungsbeispiele der Erfindung sind in der Zeichnung dargestellt und werden im folgenden näher beschrieben. Es zeigen

Figur 1 ein erstes Ausführungsbeispiel einer Einrichtung

Figur 2 ein zweites Ausführungsbeispiel einer Einrichtung

Figur 3 ein drittes Ausführungsbeispiel einer Einrichtung

Die in den Figuren dargestellten Einrichtungen weisen einen Sollwertgeber 1 auf, der durch ein nichtdargestelltes Gaspedal vom Fahrer zwischen einer Leerlaufstellung LL und einer Vollgasstellung VG verstellbar ist. Elektrische Übertragungsmittel 2 führen vom Sollwertgeber über einen elektronischen Regler 3 zu einem Stellglied 4. Das elektrische Signal des Sollwertgebers 1 wird im Regler 3 durch z. B. das Signal einer Geschwindigkeitsbegrenzung noch beeinflußt und dem Stellglied 4 zugeleitet.

Das Stellglied 4 ist über ein Kupplungsstück 5 mit einem Stellorgan 6 wie z. B. einer Drosselklappe in der Ansaugleitung eines Verbrennungsmotors derart verbunden, daß Stellglied 4 und Stellorgan 6 sich immer in einer sich jeweils entsprechenden Position zwischen einer Leerlaufstellung LL und einer Vollgasstellung VG befinden. Bei intakter Einrichtung erfolgt eine Verstellung des Stellorgans 6 entsprechend der Stellung des Sollwertgebers über die elektrischen Übertragungsmittel 2.

Zwischen dem Sollwertgeber 1 und dem Stellglied 4 bzw. dem Stellorgan 6 ist ein mechanisches Übertragungselement 7 bzw. 7' mit einem Ausgleichselement 8 bzw. 8' angeordnet durch das nach Überwindung eines Spiels 9 das Stellglied 4 und das Stellorgan 6 mechanisch vom Sollwertgeber 1 und Gaspedal betätigbar ist.

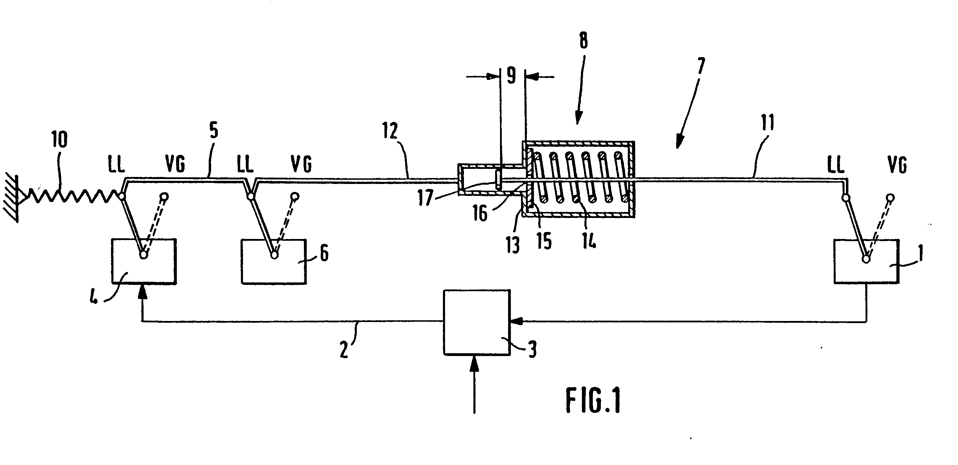

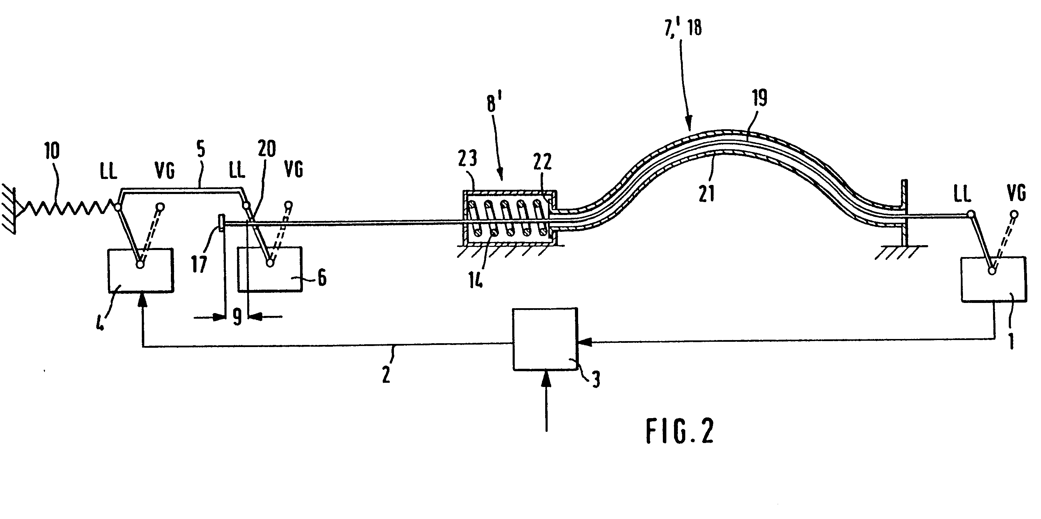

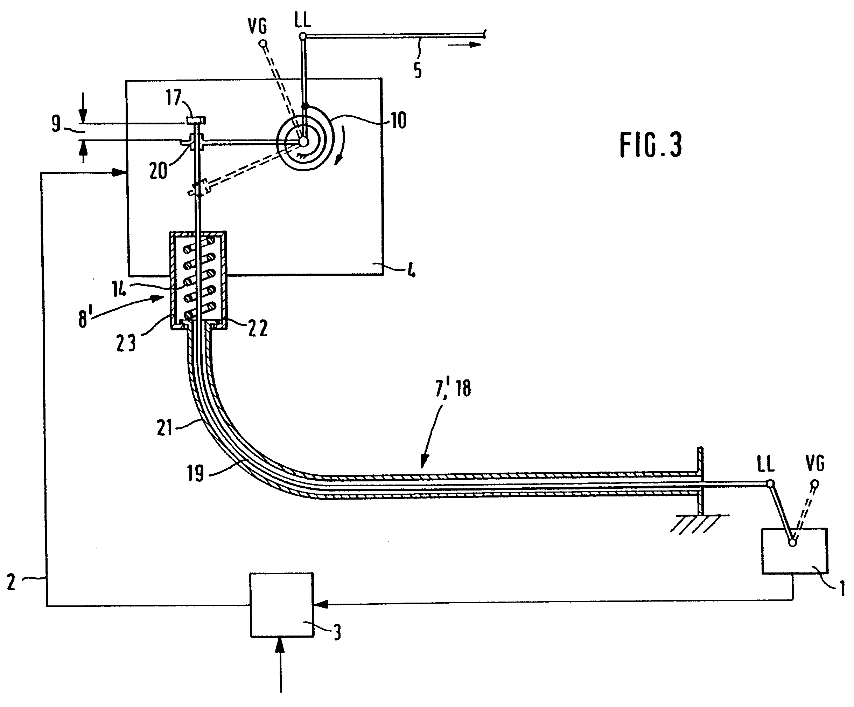

Durch eine Rückstellfeder 10, die in den Figuren 1 und 2 eine lineare Zugfeder und in Figur 3 eine Spiralfeder ist, sind das Stellglied 4 und das Stellorgan 6 federnd in ihre Leerlaufstellung vorgespannt.

In Figur 1 besteht das Übertragungselement 7 aus einem zweiteiligen Gestänge dessen einer Teil 11 mit dem Sollwertgeber 1 und dessen zweiter Teil 12 mit dem Kupplungsstück 5 verbunden ist. Die beiden koaxial zueinander angeordneten und bewegbaren Teile 10 und 11 sind über das Ausgleichselement 8 miteinander verbunden.

Am Teil 12 ist koaxial eine topfartige Stufenbüchse 13 mit ihrer kleinen Stufe befestigt. Zwischen den beiden Stirnwänden der großen Stufe ist unter Vorspannung eine Druckfeder 14 angeordnet, die mit ihrem einen Ende direkt an der dem Sollwertgeber 1 näheren Stirnwand und mit ihrem anderen Ende über eine axial verschiebbare Anschlagscheibe 15 an der dem Sollwertgeber 1 entfernteren Stirnwand in Anlage ist.

Der Teil 1 des Gestänges ragt durch die große Stufe der Stufenbüchse 13 und eine zentrische Öffnung 16 der Anschlagscheibe 15 in die kleine Stufe der Stufenbüchse 13 hinein und trägt an diesem Ende einen Anschlag 17.

In der störungsfrei dargestellten Einrichtung entspricht der Abstand zwischen dem Anschlag 17 und der Anschlagscheibe 15 dem Spiel 9. Dieses Spiel 9 wird im Normalfall bei einer Verstellung des Sollwertgebers 1 durch die gleichzeitige entsprechende Verstellung des Stellorgans 6 beibehalten. Nur, wenn aufgrund einer Sonderfunktion der Regler 3 das Stellglied 4 auf eine geringere Verstellung aus der Leerlaufstellung ansteuert als der Verstellung des Sollwertgebers 1 so verringert sich das Spiel 9. Da eine solche Abweichung aber unter 30 % des maximalen Verstellwegs des Sollwertgebers 1 liegt und das Spiel 9 30 % dieses maximalen Verstellwegs beträgt, kommt es zu keinem Anliegen des Anschlags 17 an der Anschlagscheibe 15.

Bei einem Ausfall der elektrischen Ansteuerung des Stellglieds 4 wird diese sowie das Stellorgan 6 durch die Rückstellfeder 10 in Richtung der Leerlaufstellung LL bewegt.

Bei Bewegung des Sollwertgebers 1 in Vollgasrichtung gelangt das Teil 11 nach Überwindung des Spiels 9 mit seinem Anschlag 17 in Anlage an der Anschlagscheibe 15. Da die Federkraft der Druckfeder 14 höher ist als die der Rückstellfeder 10, erfolgt bei einer weiteren Bewegung des Sollwertgebers 1 in Vollgasrichtung auch eine Verstellung des Stellglieds 4 und des Stellorgans 6, so daß mit einem Verstellweg von 70 % des maximalen Verstellwegs weiterhin ein manövrierfähiger Fahrbetrieb durchgeführt werden kann.

Wenn die Ansteuerung des Stellglieds 1 aufgrund der Sonderfunktion über den Regler 3 noch intakt ist, kann sich unter Zusammendrücken der Druckfeder 14 das Stellglied 4 und das Stellorgan 6 entgegen der in Vollgasrichtung gerichteten Bewegung des Sollwertgebers in Leerlaufrichtung bewegen.

In den Figuren 2 und 3 sind Übertragungselement 7' und Ausgleichselement 8' gleich ausgebildet. Das Übertragungselement 7 besteht aus einem Bowdenzug 18, dessen Seele 19 mit ihrem einen Ende am Sollwertgeber 1 befestigt ist. Das andere Ende der Seele 19 ist mit einem Anschlag 17 versehen und derart am Stellorgan 6 bzw. am Stellglied 4 angeordnet, daß sie um das Spiel 9, das 30 % des maximalen Verstellweges des Stellorgans 6 bzw. des Stellglieds 4 beträgt, durch eine Ausnehmung 20 am Stellorgan 6 bzw. Stellglied 4 hindurchragt.

Die Seele 19 ist in einer biegbaren aber längenkonstanten Hülle 21 verschiebbar geführt, die mit ihrem einen Ende fest im Bereich des Sollwertgebers 1 angeordnet ist. Das andere Ende der Hülle 21 ist mit einem sich radial erweiternden Flansch 22 versehen und ragt in eine fest angeordnete Büchse 23 hinein, durch die die Seele 19 axial hindurchgeführt ist.

In dieser Büchse 23 ist eine vorgespannte Druckfeder 14 größerer Kraft als der Kraft der Rückstellfeder 10 an der dem Sollwertgeber 1 abgewandten Stirnseite der Büchse 23 abgestützt und drückt den Flansch 22 gegen die andere Stirnseite der Büchse 23.

Die Funktion der in den Figuren 2 und 3 dargestellten Einrichtungen ist bei intakter Betätigung über die elektrischen Übertragungsmittel 2 gleich der Funktion der Einrichtung in Figur 1.

Im Defektfall kommt nach Überwindung des Spiels 9 der Anschlag 17 an der Ausnehmung 20 in Anlage am Stellglied 4 bzw. Stellorgan 6 und kann dieses noch um einen Verstellweg von 70 % des maximalen Verstellwegs entgegen der Kraft der Rückstellfeder 10 in Vollgasrichtung verstellen.

Erfolgt bei einer mechanischen Kupplung von Sollwertgeber 1 und Stellglied 4 bzw. Stellorgan 6 über den Anschlag 17 eine Ansteuerung des Stellglieds 4 in Leerlaufrichtung durch den Regler 3 aufgrund einer Sonderfunktion, so zieht die in der Hülle 21 gespannt geführte Seele unter Verbiegung der Hülle 21 diese entgegen der Kraft der Druckfeder 14 in die Büchse 23 hinein.

## Patentansprüche

1. Einrichtung zur Übertragung der Stellposition zwischen einer Leerlauf- und einer Vollgasstellung eines die Fahrgeschwindigkeit eines Fahrzeuges steuernden und durch den Fahrzeugführer über ein Steuerelement verstellbaren elektrischen Sollwertgebers (1) durch elektrische Übertragungsmittel auf ein entsprechend zwischen einer Leerlauf- und einer Vollgasstellung verstellbares Stellglied (4), das mit einem das Kraftstoff-Luft-Gemisch eines Verbrennungsmotors steuernden Stellorgan (6) gekuppelt ist, dadurch gekennzeichnet, daß zwischen Sollwertgeber (1) und Stellglied (4) bzw. Stellorgan (6) ein mechanisches Übertragungselement (7, 7') angeordnet ist, das mit dem Sollwertgeber (1) und/oder dem Stellglied (4) und/oder dem Stellorgan (6) kuppelbar und durch das die Stellung des Sollwertgebers (1) auf das Stellorgan (6) übertragbar ist, wobei das Übertragungselement (7, 7') von dem Sollwertgeber (1) und/oder dem Stellglied (4) und/oder dem Stellorgan (6) bei der der Stellung des Sollwertgebers (1) entsprechenden Stellung des Stellorgans (6) entkuppelt ist.

2. Einrichtung nach Anspruch 1, dadurch gekennzeichnet, daß das Übertragungselement (7) ein Gestänge (11, 12) ist.

3. Einrichtung nach Anspruch 1, dadurch gekennzeichnet, daß das Übertragungselement (7') ein Bowdenzug (18) ist.

4. Einrichtung nach einem der vorhergehenden Ansprüche, dadurch gekennzeichnet, daß das Stellglied (4) und/oder das Stellorgan (6) in seine Leerlaufstellung federnd vorgespannt ist.

5. Einrichtung nach einem der vorhergehenden Ansprüche, dadurch gekennzeichnet, daß das Übertragungselement (7, 7') an Sollwertgeber (1) und/oder Stellglied (4) und/oder Stellorgan (6) in Verstellrichtung um ein bestimmtes Spiel (9) frei beweglich angeordnet ist, das kleiner als der maximale Verstellweg ist.

6. Einrichtung nach Anspruch 5, dadurch gekennzeichnet, daß das Spiel (9) etwa 30 % des maximalen Verstellwegs von Sollwertgeber (1) oder Stellglied (4) oder Stellorgan (6) beträgt.

7. Einrichtung nach Anspruch 5, dadurch gekennzeichnet, daß das Übertragungselement (7, 7') einen Anschlag (19) besitzt, der nach Überwindung des Spiels (9) formschlüssig mit einem Verstellglied des Sollwertgebers (1) oder des Stellglieds (4) oder des Stellorgans (6) kuppelbar ist.

8. Einrichtung nach einem der vorhergehenden Ansprüche, dadurch gekennzeichnet, daß das Übertragungselement (7, 7') ein Ausgleichselement (8, 8') aufweist, über das entgegen einer Federkraft gleichzeitig der mit dem Sollwertgeber (1) verbindbare Teil des Übertragungselements (7, 7') in Vollgasrichtung und der mit dem Stellglied (4) bzw. Stellorgan (6) verbindbare Teil des Übertragungselements (7, 7') in Leerlaufrichtung bewegbar ist.

9. Einrichtung nach Anspruch 8, dadurch gekennzeichnet, daß das Ausgleichselement (8, 8') eine vorgespannte Druckfeder (14) zur Erzeugung der am Übertragungselement (7, 7') angreifenden Federkraft besitzt.

10. Einrichtung nach einem der vorhergehenden Ansprüche, dadurch gekennzeichnet, daß das Ausgleichselement (8, 8') im Sollwertgeber (1) bzw. im Stellglied (4) integriert ist.

## Claims

1. Apparatus whereby the regulating position between an idling position and a full-throttle position of an electrical desired-value signal emitter (1) which controls the speed of travel of a vehicle and which is adjustable by the vehicle driver via a control element can be transmitted by electrical transmission means to a regulating element (4) which is adjustable correspondingly between an idling and a full-throttle position and which is coupled to a regulating device (6) controlling the fuel-air mixture of an internal combustion engine, characterised in that between desired-value signal emitter (1) and regulating element (4), or regulating device (6), there is arranged a mechanical transmission element (7, 7') which is couplable to the desired-value signal emitter (1) and/or the regulating element (4) and/or the regulating device (6) and whereby the position of the desired-value signal emitter (1) is transmittable to the regulating device (6), the transmission element (7, 7') being uncoupled from the desired-value signal emitter (1) and/or the regulating element (4) and/or the regulating device (6) when the regulating device (6) is in a position corresponding to the position of the desired-value signal emitter (1).

2. Apparatus according to claim 1, characterised in that the transmission element (7) is a rod linkage (11, 12).

3. Apparatus according to claim 1, characterised in that the transmission element (7') is a Bowden cable system (18).

4. Apparatus according to one of the preceding claims, characterised in that the regulating element (4) and/or the regulating device (6) is preloaded elastically into its idling position.

5. Apparatus according to one of the preceding claims, characterised in that the transmission element (7, 7') is arranged on the desired-value signal emitter (1) and/or regulating element (4) and/or regulating device (6) so as to be freely movable in the adjusting direction to the extent of a specific play (9) which is smaller than the maximum adjustment travel.

6. Apparatus according to claim 5, characterised in that the play (9) amounts to about 30 % of the maximum adjustment travel of the desired-value signal emitter (1) or regulating element (4) or regulating device (6).

7. Apparatus according to claim 5, characterised in that the transmission element (7, 7') has an abutment (19) which after overcoming the play (9) is couplable positively to an adjusting element of the desired-value signal emitter (1) or of the regulating element (4) or of the regulating device (6).

8. Apparatus according to one of the preceding claims, characterised in that the transmission element (7, 7') has a compensating element (8, 8') through which, in opposition to a spring force, simultaneously the part of the transmission element (7, 7') connectable to the desired-value signal emitter (1) is movable in the fullthrottle direction and the part of the transmission element (7, 7') connectable to the regulating element (4), or regulating device (6), is movable in the idling direction.

9. Apparatus according to claim 8, characterised in that the compensating element (8, 8') has a preloaded compression spring (14) for producing the spring force which acts on the transmission element (7, 7').

10. Apparatus according to one of the preceding claims, characterised in that the compensating element (8, 8') is integrated in the desired-value signal emitter (1) or in the regulating element (4).

## Revendications

1. Dispositif pour transmettre la position de réglage, entre une position de ralenti et une position de pleins gaz, d'un indicateur électrique (1) de valeurs de consigne qui commande la vitesse de déplacement d'un véhicule et peut être réglé par le conducteur de ce véhicule, par l'intermédiaire d'un élément de commande, ladite transmission ayant lieu, par l'intermédiaire de moyens électriques de transmission, sur un organe de réglage (4) qui peut être réglé de manière correspondant à une position de ralenti et une position de pleins gaz, et qui est couplé à un organe de manoeuvre (6) commandant le mélange carburant-air d'un moteur à combustion interne, caractérisé par le fait qu'un élément mécanique de transmission (7, 7') est intercalé entre l'indicateur (1) de valeur(s) de consigne et l'organe de réglage (4) ou l'organe de manoeuvre (6), respectivement, cet élément pouvant être couplé à l'indicateur (1) de valeur(s) de consigne et/ou à l'organe de réglage (4) et/ou à l'organe de manoeuvre (6), élément par l'intermédiaire duquel la position de l'indicateur (1) de valeur(s) de consigne peut être transmise à l'organe de manoeuvre (6), ledit élément de transmission (7, 7') étant désaccouplé de l'indicateur (1) de valeur(s) de consigne et/ou de l'organe de réglage (4) et/ou de l'organe de manoeuvre (6) lorsque cet organe de manoeuvre (6) occupe une position correspondant à la position de l'indicateur (1) de valeur(s) de consigne.

2. Dispositif selon la revendication 1, caracterisé par le fait que l'élément de transmission (7) est une tringlerie (11, 12).

3. Dispositif selon la revendication 1, caractérisé par le fait que l'élément de transmission (7') est un câble Bowden (18).

4. Dispositif selon l'une des revendications précédentes, caractérisé par le fait que l'organe de réglage (4) et/ou l'organe de manoeuvre (6) sont préchargés élastiquement à leur position de ralenti.

5. Dispositif selon l'une des revendications précédentes, caractérisé par le fait que l'élément de transmission (7, 7') est installé sur l'indicateur (1) de valeur de consigne et/ou sur l'organe de réglage (4) et/ou sur l'organe de manoeuvre (6), avec faculté de mouvement libre d'un jeu (9) déterminé dans la direction du réglage, ce jeu étant plus petit que la course de réglage maximale.

6. Dispositif selon la revendication 5, caractérisé par le fait que le jeu (9) représente environ 30 % de la course de réglage maximale de l'indicateur (1) de valeur(s) de consigne ou de l'organe de réglage (4) ou de l'organe de manoeuvre (6).

7. Dispositif selon la revendication 5, caractérisé par le fait que l'élément de transmission (7, 7') possède une butée (17) qui, une fois le jeu (9) surmonté, peut être couplée par concordance de formes à une pièce d'ajustement de l'indicateur (1) de valeur(s) de consigne ou de l'organe de réglage (4) ou de l'organe de manoeuvre (6).

8. Dispositif selon l'une des revendications précédentes, caractérisé par le fait que l'élément de transmission (7, 7') présente un élément compensateur (8, 8') par l'intermédiaire duquel, à l'encontre d'une force élastique, un mouvement peut être simultanément imprimé dans la direction d'accélération maximale à la partie de l'élément de transmission (7, 7') pouvant être reliée à l'indicateur (1) de valeur(s) de consigne et, dans la direction de ralenti, à la partie de cet élément de transmission (7, 7') pouvant être respectivement reliée à l'organe de réglage (4) ou à l'organe de manoeuvre (6).

9. Dispositif selon la revendication 8, caractérisé par le fait que l'élément compensateur (8, 8') possède un ressort de pression (14) soumis à une précharge, en vue d'engendrer la force élastique agissant sur l'élément de transmission (7, 7').

10. Dispositif selon l'une des revendications précédentes, caractérisé par le fait que l'élément compensateur (8, 8') est intégré dans l'indicateur (1) de valeur(s) de consigne ou dans l'organe de réglage (4).

FIG.1

FIG.2

FIG.3